# EUROPÄISCHE PATENTANMELDUNG

(11) **EP 4 715 142 A1**
(43) Veröffentlichungstag der Anmeldung: **25.03.2026**
(21) Anmeldenummer: 25203077.0
(22) Anmeldetag: 18.09.2025
(51) Int. Cl.: E04H 12/08, E04H 12/12, F03D 13/20

(54) **ADAPTERSTÜCK ZUR VERBINDUNG EINES UNTEREN, RINGFÖRMIGEN BETONTURMABSCHNITTS MIT EINEM OBEREN, RINGFÖRMIGEN STAHLTURMABSCHNITT SOWIE TURM MIT EINEM ADAPTERSTÜCK**

(30) Priorität: 23.09.2024 DE 102024127388
(71) Anmelder: Max Boegl Wind AG, 92369 Sengenthal (DE)
(72) Erfinder: Betz, Thorsten, 92318 Neumarkt (DE); Endres, Thomas, 92289 Ursensollen (DE)
(74) Vertreter: Canzler & Bergmeier Patentanwälte Partnerschaft mbB

(57) **Zusammenfassung**

Ein Adapterstück (1) zur Verbindung eines unteren, ringförmigen Betonturmabschnitts (2) mit einem oberen, ringförmigen Stahlturmabschnitt (3), insbesondere eines Windkraftturms (4) ist als Beton-Stahl-Verbundteil mit einem ringförmigen Stahlelement (5) und einem ringförmigen Betonelement (6) ausgebildet. Das ringförmige Stahlelement (5) umfasst einen oberen, insbesondere L-förmigen, Befestigungsflansch (7) zum Verbinden mit dem Stahlturmabschnitt (3). Das Adapterstück (1) umfasst eine Anlagefläche (8), mit der das Adapterstück (1) auf dem Betonturmabschnitt (2) anordenbar ist. Dabei weist das Betonelement (6) die Anlagefläche (8) auf und das ringförmige Stahlelement (5) weist einen unteren, insbesondere T-förmigen, Flansch (9) auf, welcher eine Oberseite (10) des Betonelements (6) bedeckt. Ein Turm mit einem unteren, ringförmigen Betonturmabschnitt (2) und einem oberen, ringförmigen Stahlturmabschnitt (3) weist ein solches Adapterstück (1) auf.

## Beschreibung

Die vorliegende Erfindung betrifft ein Adapterstück zur Verbindung eines unteren, ringförmigen Betonturmabschnitts mit einem oberen, ringförmigen Stahlturmabschnitt, insbesondere eines Windkraftturms. Das Adapterstück ist als Beton-Stahl-Verbundbauteil mit einem ringförmigen Stahlelement und einem ringförmigen Betonelement ausgebildet. Das ringförmige Stahlelement umfasst einen oberen, insbesondere L-förmigen, Befestigungsflansch zum Verbinden mit dem Stahlturmabschnitt. Das Adapterstück umfasst eine Anlagefläche, mit der das Adapterstück auf dem Betonturmabschnitt anordenbar ist.

Aus der WO 2011/157476 A1 ist ein Adapterstück für einen Windkraftturm bekannt. Das Adapterstück weist ein ringförmiges Stahlelement und ein ringförmiges Betonelement auf, welche direkt miteinander vergossen sind. Das Adapterstück weist einen konsolartigen Vorsprung in seinem oberen Bereich auf, in welchen Hüllrohre zur Aufnahme von Spanngliedern eingebettet sind. An dem Vorsprung können externe Spannglieder festgelegt werden. Weiterhin sind in das Adapterstück eine Vielzahl von Ankerbolzen eingegossen, welche durch entsprechende Bohrungen des Stahlelementes hindurchgeführt sind und die Oberseite des Adapterstücks übertragen. Mittels der Ankerbolzen kann ein Stahlturmabschnitt auf dem Adapterstück festgelegt werden. Das Adapterstück ist vergleichsweise massiv.

Die DE 10 2012 001 109 A1 schlägt demgegenüber ein Adapterstück vor, das ein im Schnitt annähernd C förmig ausgestaltetes Stahlelement beinhaltet, das in seinem oberen Bereich einen Befestigungsflansch für einen Stahlturmabschnitt aufweist. In seinem unteren Bereich ist der C-förmige Ring mit Beton verfüllt. Der Beton enthält ebenfalls Hüllrohre für die Aufnahme von externen Spanngliedern. Der untere Bereich des C-förmigen Ringes ist dabei als verlorene Schalung für das Betonelement ausgebildet. Das C-förmige Stahlelement liegt auf dem darunterliegenden Betonturmabschnitt auf. Das Adapterstück soll hierdurch kostengünstig hergestellt werden können.

Aufgabe der vorliegenden Erfindung ist es, ein Adapterstück vorzuschlagen, welches kostengünstig herstellbar ist und dennoch die Ableitung hoher Kräfte in den unteren Betonturmabschnitt ermöglicht.

Die Aufgabe wird gelöst durch ein Adapterstück und einen Turm mit den Merkmalen der unabhängigen Patentansprüche.

Ein Adapterstück zur Verbindung eines unteren, ringförmigen Betonturmabschnitts mit einem oberen, ringförmigen Stahlturmabschnitt, insbesondere eines Windkraftturms, ist als Beton-Stahl-Verbundteil mit einem ringförmigen Stahlelement und einem ringförmigen Betonelement ausgebildet. Das ringförmige Stahlelement umfasst einen oberen, insbesondere L-förmigen, Befestigungsflansch zum Verbinden mit dem Stahlturmabschnitt und das Adapterstück umfasst eine Anlagefläche, mit der das Adapterstück auf dem Betonturmabschnitt anordenbar ist.

Für ein solches Adapterstück wird vorgeschlagen, dass das Betonelement die Anlagefläche aufweist und dass das ringförmige Stahlelement einen unteren, insbesondere T-förmigen, Flansch aufweist, welcher eine Oberseite des Betonelements bedeckt, vorzugsweise vollständig bedeckt. Dadurch, dass die Anlagefläche nicht an dem Stahlelement, sondern an dem Betonelement ausgebildet ist, kann nun eine besonders gute und gleichmäßige Krafteinleitung in den Betonturmabschnitt erfolgen und Schädigungen der Oberseite des Betonturmabschnitts können vermieden werden. Demgegenüber konnte es beim Stand der Technik, bei welchem die Kraftübertragung auf den unteren Betonturmabschnitt mittels des Stahlelements erfolgte, zu hohen Spannungsspitzen sowie Abplatzungen und Beschädigungen an der Oberfläche des Betonturmabschnitts kommen. Dadurch, dass der untere Flansch des Stahlelements die Oberseite des Betonelements überdeckt, kann an dieser Stelle die besonders kritische Verbindung zwischen dem Stahlelement und dem Betonelement hergestellt werden. Durch die Herstellung des Adapterstücks als Stahl-Beton-Verbundbauteil kann hier eine besonders gute Verbindung und dadurch eine besonders gute Kraftübertragung von dem Stahlelement auf das Betonelement erfolgen, welches wiederum die besonders gleichmäßige vertikale Abtragung der Lasten in den Betonturmabschnitt ermöglicht. Zudem ist hierdurch das Betonelement lediglich im unteren Bereich des Adapterstücks vorgesehen, während das Adapterstück in seinem oberen Bereich nur aus Stahl besteht. Das Betonelement kann hierdurch besonders kompakt ausgeführt werden.

Insgesamt kann ein Adapterstück bereitgestellt werden, das eine besonders geringe Masse aufweist und dadurch besonders gut gehandhabt werden kann und durch den Übergang vom Betonelement zu dem darunterliegenden Betonturmabschnitt dennoch die Abtragung sehr hoher Kräfte erlaubt.

Besonders vorteilhaft ist es, wenn das Stahlelement ein äußeres Stahlelement ist, welches ein innenliegendes Betonelement von außen umgibt. Das Betonelement ist hierbei durch das außenliegende Stahlelement geschützt. Radial nach außen wirkende Kräfte auf das Betonelement, welche zum Beispiel durch die Exzentrizität bei der Vorspannung auftreten können, können durch das äußere Stahlelement besonders gut aufgenommen werden.

Vorteilhaft ist es dabei weiterhin, wenn der obere Befestigungsflansch für den Stahlturmabschnitt radial nach innen weist. Die Verbindung zwischen dem Befestigungsflansch und dem Stahlturmabschnitt liegt hierdurch geschützt im Inneren des Stahlturmabschnitts bzw. des Befestigungsflansches. Es sind jedoch auch Ausführungen denkbar, bei welchen sich der Befestigungsflansch radial nach außen erstreckt.

Die Begriffe "oben", "unten", "oberes", "unteres", "Oberseite", "Unterseite" usw. beziehen sich dabei auf die Einbaulage des Adapterstücks, welche durch den Befestigungsflansch für den Stahlturmabschnitt und das Betonelement mit der Anlagefläche für den Betonturmabschnitt schnell und leicht erkennbar ist.

Vorteile bringt es mit sich, wenn das ringförmige Stahlelement eine, insbesondere unterhalb, des oberen Befestigungsflansches angeordnete, insbesondere radial nach innen weisende, ringförmige Ankerplatte zur Verankerung von vorzugsweise externen Spanngliedern aufweist. Über die Ankerplatte können die Spannkräfte, welche durch die Spannglieder aufgebracht werden, homogen und dem Kraftfluss entsprechend in den unteren Flansch des Stahlelements eingeleitet werden, welcher die Verbindung zu dem Betonelement herstellt.

Nach einer anderen Ausführung ist es jedoch vorteilhaft, wenn der obere Befestigungsflansch zugleich als Ankerplatte zur Verankerung von vorzugsweise externen Spanngliedern ausgebildet ist. Auch über eine solche mit dem oberen Befestigungsflansch kombinierte Ankerplatte können die Spannkräfte der Spannglieder gut in den unteren Flansch des Adapters eingeleitet werden. Besonders vorteilhaft bei dieser Ausführung ist es, dass das Adapterstück hierdurch noch kompakter und leichter ausgeführt werden kann.

Auch ist es vorteilhaft, wenn der obere Befestigungsflansch oder die Ankerplatte durch mehrere, über einen Umfang des Adapterstücks verteilte, Versteifungsstreben versteift ist. Über die Versteifungsstreben können die Kräfte aus der Vorspannung durch die Spannglieder beispielsweise in ein Mantelelement des Stahlelements eingeleitet werden. Das Mantelelement leitet die Kräfte wiederum in den unteren Flansch ab. Besonders vorteilhaft ist es dabei, wenn der obere Befestigungsflansch oder die Ankerplatte durch die mehreren Versteifungsstreben mit dem unteren Flansch verbunden ist. Hierdurch kann eine besonders gute Versteifung des oberen Befestigungsflansches oder der Ankerplatte erzielt werden.

Vorteile bringt es mit sich, wenn eine radial nach innen weisende Seite der Versteifungsstreben eine zumindest teilweise nichtlineare, insbesondere zumindest teilweise ausgerundete, Kontur aufweist. Die radial nach innen weisende Seite der Versteifungsstreben ist dabei die Seite oder Kante, welche einen Innenumfang oder einen inneren Bereich der Ankerplatte mit einem unteren Bereich des Mantelelements oder auch mit einem Innenumfang oder einem inneren Bereich des unteren Flansches verbindet. Ist diese zumindest teilweise nichtlinear ausgebildet, insbesondere ausgerundet oder gevoutet, so kann ein verbessertes Verformungsverhalten des Stahlelements und ein verbesserter Kraftfluss erreicht werden, welcher einen größeren Anteil der abzutragenden Last in das Mantelelement ableitet. Die großen Kräfte aus der Vorspannung über die Spannglieder können hierdurch besonders gut abgeleitet werden. Ebenso kann ein Klaffen der Fuge zwischen dem Stahlelement und dem Betonelement vermieden werden. Der Begriff "nichtlinear" umfasst dabei jegliche regelmäßige und nichtregelmäßige Krümmung der radial nach innen weisenden Seite und insbesondere auch eine polygonzugartige Ausbildung der Kontur.

Die radial nach innen weisende Seite der Versteifungsstreben ist insbesondere eine Schrägseite, insbesondere eine Schrägseite eines rechtwinkligen Trapezes.

Des Weiteren ist es vorteilhaft, wenn der untere Flansch eine untere Aufstandsfläche für die Versteifungsstreben bildet. Hierdurch kann eine besonders gute Abstützung der Versteifungsstreben erfolgen und dadurch eine besonders gute Versteifungswirkung erzielt werden.

Auch ist es vorteilhaft, wenn der untere Flansch eine Unterseite der Versteifungsstreben radial nach innen überragt. Anders ausgedrückt sind die Unterseiten der Versteifungsstreben gegenüber dem Innenumfang des unteren Flansches radial nach außen versetzt auf dem unteren Flansch angeordnet. Hierdurch kann ein verbessertes Verformungsverhalten des Stahlelementes erreicht werden, welches ebenfalls einem Klaffen der Fuge zwischen dem Stahlelement und der oberen Oberfläche des Betonelements entgegenwirkt.

Vorzugsweise überragt der untere Flansch die Unterseite der Versteifungsstreben um höchstens die Länge der Unterseite der Versteifungsstreben und besonders bevorzugt überragt der untere Flansch die Unterseite um höchstens 20 mm radial nach innen. Hierdurch kann eine optimale Steifigkeit des Adapterstücks im Bereich des unteren Flansches erreicht werden.

Vorteilhaft ist es zudem, wenn die Ankerplatte oder der Befestigungsflansch eine Oberseite der Versteifungsstreben radial nach innen überragt. Anders ausgedrückt sind die Oberseiten der Versteifungsstreben auch gegenüber der Ankerplatte oder dem Befestigungsflansch radial nach außen hin versetzt angeordnet. Auch hierdurch kann eine bessere Verträglichkeit der Verformung erzielt werden und einem Klaffen auf der Außenseite zwischen dem Stahlelement, genauer dem unteren Flansch des Stahlelements und der oberen Oberfläche des Betonelements entgegengewirkt werden.

Vorzugsweise überragt dabei die Ankerplatte oder der Befestigungsflansch die Oberseite der Versteifungsstreben um höchstens die Länge der Oberseite der Versteifungsstreben und besonders bevorzugt überragt die Ankerplatte oder der Befestigungsflansch die Oberseite der Versteifungsstreben um höchstens 20 mm radial nach innen. Auch dies trägt zu einem optimalen Verformungsverhalten des Adapterstücks bei.

Vorteile bringt es auch mit sich, wenn die Ankerplatte und/oder der obere Befestigungsflansch den unteren Flansch radial nach innen überragt. Die Spannglieder können hierdurch in optimaler Weise auch als externe Spannglieder eingesetzt werden und die exzentrischen Belastungen aus der Vorspannung können dennoch, insbesondere aufgrund der Versteifungsstreben, gut in das Mantelblech und den unteren Flansch abgeleitet werden.

Vorteilhaft ist es, wenn die Versteifungsstreben eine im Wesentlichen rechteckige oder trapezförmige Grundform, insbesondere eine rechtwinklige, trapezförmige Grundform aufweisen. Hierdurch kann ein besonders günstiger Kraftfluss erzielt werden. Die Schrägseite des Trapez oder eine Schrägseite des Trapez, soweit es sich nicht um ein rechtwinkliges Trapez handelt, weist dabei insbesondere radial nach innen.

Ebenso ist es vorteilhaft, wenn an dem unteren, insbesondere T-förmigen Flansch des ringförmigen Stahlelements wenigstens ein ringförmiges, nach unten weisendes, Schalungselement, insbesondere Schalungsblech, vorzugsweise zwei radial voneinander beabstandete ringförmige, nach unten weisende Schalungselemente, insbesondere Schalungsbleche, angeordnet ist/sind, welche(s) das Betonelement radial innen und/oder radial außen umgibt/umgeben. Anders ausgedrückt bildet das wenigstens eine ringförmige Schalungselement eine verlorene Schalung für das Betonelement. Radial auf das Betonelement wirkende Kräfte können durch das wenigstens eine Schalungselement besonders gut aufgenommen werden.

Des Weiteren ist es vorteilhaft, wenn das wenigstens eine Schalungselement zumindest auf seiner dem Betonelement zugewandten Oberfläche eine Profilierung und/oder mehrere Ankerelemente aufweist. Hierdurch kann eine besonders gute Verbindung des Betonelements mit dem Stahlelement erzielt werden und ein Herausrutschen des Betons verhindert werden.

Vorteilhaft ist es zudem, wenn die Anlagefläche des Adapterstücks überschliffen ist. Vorzugsweise ist dabei die Anlagefläche mit einer maximalen Toleranz von weniger als 5/10 mm überschliffen. Hierdurch gibt es besonders geringe Abweichungen in der Parallelität, Welligkeit und Ebenheit, welche ebenfalls zu einer guten Lastableitung beitragen und Spannungsspitzen im Beton und Beschädigungen des Betons vermeiden. Vorzugsweise steht dabei ein Betonende des Betonelements in Axialrichtung des Adapterstücks über ein Schalungsende des zumindest einen Schalungselements über. Das Überschleifen des Betonelements ist hierdurch erleichtert.

Ebenso ist es vorteilhaft, wenn das Stahlelement ein Baustahlmaterial beinhaltet. Insbesondere beinhaltet das Stahlelement ein herkömmliches, unlegiertes Baustahlmaterial. Insbesondere bei einer kraftflussgerechten Formgebung der Versteifungsstreben können gute mechanische Eigenschaften des Stahlelements erreicht werden, sodass der Einsatz eines herkömmlichen, unlegierten Baustahlmaterials ausreichend ist. Denkbar ist es jedoch auch, insbesondere bei besonderen Belastungen oder auch nur teilweise, bei besonders belasteten Strukturen, des Stahlelements, ein Feinkornstahlmaterial zu verwenden.

Auch ist es vorteilhaft, wenn Schweißnähte des Stahlelements, insbesondere Schweißnähte zwischen der Ankerplatte und einem Mantelelement des Stahlelements, durch Hochfrequenzhämmern bearbeitet sind. Hierdurch können die mechanischen Eigenschaften der Schweißnähte verbessert werden, sodass insgesamt weniger Schweißnähte sowie weniger aufwendige Schweißnähte zum Einsatz kommen können.

Dieselben Vorteile können auch mit einem Turm, insbesondere Windkraftturm, mit einem unteren, ringförmigen Betonturmabschnitt, mit einem oberen, ringförmigen Stahlturmabschnitt, und mit einem solchen Adapterstück erzielt werden, welcher ebenfalls beansprucht wird.

Weitere Vorteile der Erfindung sind in den nachfolgenden Ausführungsbeispielen beschrieben. Es zeigen:
- **Figur 1**: einen Windkraftturm mit einem Adapterstück in einer schematischen, perspektivischen Ansicht,
- **Figur 2**: ein Adapterstück in einer schematischen, geschnittenen Darstellung nach einer ersten Ausführung,
- **Figur 3**: ein Adapterstück in einer schematischen, geschnittenen Darstellung nach einer zweiten Ausführung,
- **Figur 4**: ein Adapterstück in einer schematischen, geschnittenen Darstellung nach einer dritten Ausführung,
- **Figur 5**: eine schematische, geschnittene, abgebrochene Darstellung eines Adapterstücks mit einer Versteifungsstrebe,
- **Figur 6**: eine schematische, geschnittene, abgebrochene Darstellung eines Adapterstücks mit einer versetzt angeordneten Versteifungsstrebe,
- **Figur 7**: eine schematische, abgebrochene, geschnittene Darstellung eines Adapterstücks mit einem Betonelement,
- **Figur 8**: eine schematische, geschnittene, abgebrochene Darstellung eines Adapterstücks mit einem Betonelement nach einer weiteren Ausführung,
- **Figur 9**: eine schematische, geschnittene, abgebrochene Darstellung eines Adapterstücks mit einem Betonelement nach einer weiteren, alternativen Ausführung,
- **Fig. 10** - **14**: jeweils eine schematische, geschnittene, abgebrochene Darstellung eines Adapterstücks mit einer versetzt angeordneten Versteifungsstrebe nach einer weiteren Ausführung, sowie
- **Figur 15**: zeigt ein Adapterstück nach einer weiteren Ausführung in einer schematischen, abgebrochenen Schnittdarstellung.

Bei der nachfolgenden Beschreibung der Ausführungsbeispiele werden identische oder in ihrer Gestaltung und/oder Wirkweise zumindest vergleichbare Merkmale mit gleichen Bezugszeichen versehen. Weiterhin werden diese lediglich bei ihrer erstmaligen Erwähnung detailliert erläutert, während bei den folgenden Ausführungsbeispielen lediglich auf die Unterschiede zu den bereits beschriebenen Ausführungsbeispielen eingegangen wird. Weiterhin sind aus Gründen der Übersichtlichkeit von mehreren identischen Bauteilen bzw. Merkmalen oftmals nur eines oder nur einige wenige beschriftet. Ebenso sind Bauteile, welche bereits in vorangegangenen Figuren erläutert wurden, in den folgenden Figuren aus Gründen der Übersichtlichkeit teilweise nicht mehr beschriftet.

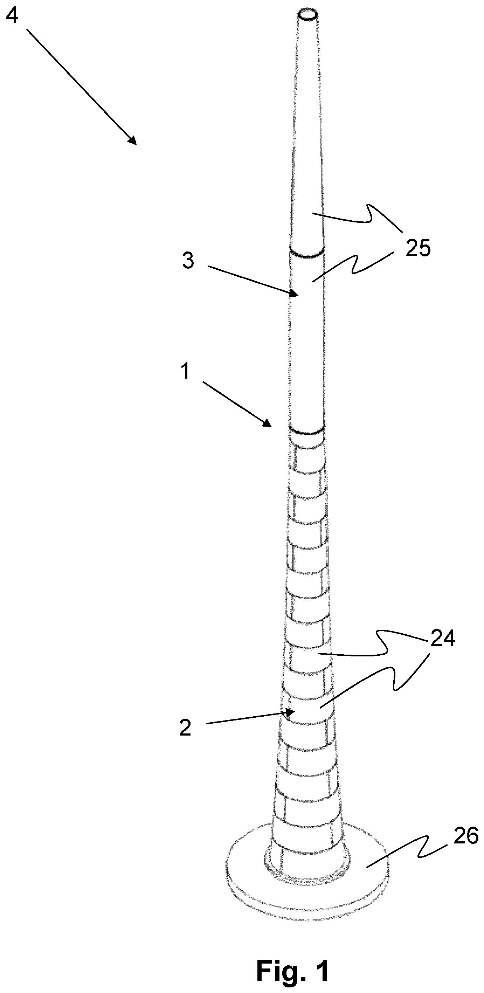

Figur 1 zeigt einen Turm, welcher vorliegend als Windkraftturm 4 ausgebildet ist, mit einem unteren ringförmigen, auf einem Fundament 26 angeordneten Betonturmabschnitt 2 und einem oberen, ringförmigen Stahlturmabschnitt 3, welche mittels eines Adapterstücks 1 miteinander verbunden sind. Der Betonturmabschnitt 2 ist vorliegend aus mehreren, übereinander angeordneten Betonfertigteilen 24 ausgebildet. Alternativ wäre es jedoch ebenfalls denkbar, den Betonturmabschnitt 2 in Ortbeton auszubilden. Ebenso ist der Stahlturmabschnitt 3 aus mehreren Stahlrohrschüssen 25 ausgebildet. Es versteht sich, dass dies lediglich beispielhaft zu verstehen ist und der Stahlturmabschnitt auch nur einen einzigen Stahlrohrschuss 25 umfassen könnte. Vorliegend nicht dargestellt sind Gondel, Nabe und Rotor einer Windkraftanlage, welche auf einem solchen Windkraftturm 4 angeordnet werden können. Der Turm muss jedoch nicht zwangsläufig als Windkraftturm 4 ausgebildet sein, sondern könnte auch als Sendeturm oder dergleichen dienen.

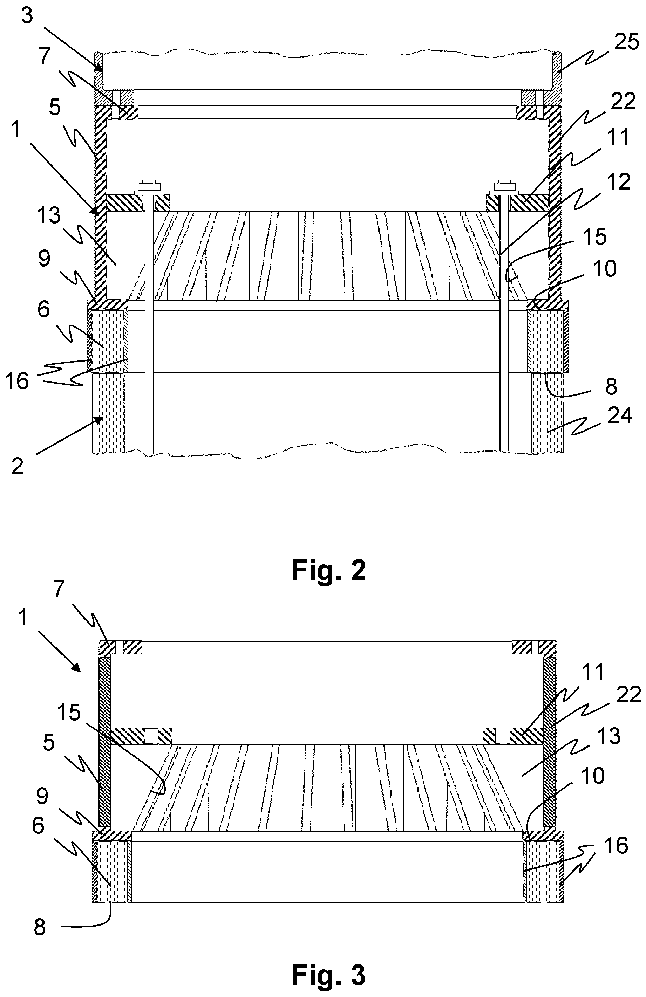

Figur 2 zeigt eine schematische, geschnittene Darstellung eines Adapterstücks 1. Das Adapterstück ist als Beton-Stahl-Verbundbauteil ausgebildet und weist ein ringförmiges Stahlelement 5 sowie ein ringförmiges Betonelement 6 auf. Das ringförmige Stahlelement 5 weist einen oberen Befestigungsflansch 7 auf, an welchem der obere Stahlturmabschnitt 3 festgelegt werden kann. Gemäß vorliegender Darstellung ist der Befestigungsflansch 7 L-förmig ausgebildet und radial nach innen gerichtet. Denkbar wäre jedoch auch eine Ausrichtung radial nach außen. Durch den Befestigungsflansch 7 kann eine standardisierte und bewährte Verbindung des Adapterstücks 1 mit dem darüberliegenden Stahlturmabschnitt 3 sichergestellt werden. Im Bereich seiner Unterseite (bezogen auf die Einbaulage des Adapterstücks 1) weist das Adapterstück 1 eine Anlagefläche 8 auf, mittels welcher das Adapterstück 1 auf dem Betonturmabschnitt 2 angeordnet werden kann.

Bei dem Adapterstück 1 ist die Anlagefläche 8 an dem Betonelement 6 ausgebildet. Hierdurch weist das Adapterstück 1 eine Betonfläche zur Verbindung mit dem Betonturmabschnitt 2 auf, welche einen für die Lastableitung günstigen Übergang zwischen dem Adapterstück 1 und dem Betonturmabschnitt 2 bereitstellt und hierdurch Beschädigungen des Betonturmabschnitts 2 vermeidet. Das ringförmige Stahlelement 5 weist zudem einen unteren Flansch 9 auf, welcher vorliegend T-förmig ausgebildet ist und eine Oberseite 10 des Betonelements 6 bedeckt. An dieser Stelle ist der Übergang zwischen Stahl und Beton realisiert, welcher durch die Ausführung als Stahl-Beton-Verbundbauteil eine besonders gute Kraftübertragung zwischen dem Stahlelement 5 und dem Betonelement 6 ermöglicht. Durch den T-förmigen Flansch 9 kann eine besonders gleichmäßige Krafteinleitung in das Betonelement 6 erfolgen. Ein L-förmiger Flansch 9 wäre jedoch ebenfalls denkbar.

Das vorliegend gezeigte Adapterstück 1 weist weiterhin eine Ankerplatte 11 auf, welche mit Durchgangsbohrungen (nicht bezeichnet) versehen ist, durch welche Spannglieder 12 hindurchgeführt werden können. Die Spannglieder 12 können auf der Oberseite der Ankerplatte 11 verankert werden und dienen der Vorspannung des Betonturmabschnitts 2. Über die Ankerplatte 11 werden die Spannkräfte, welche durch die externen und in Bezug auf die Wandung des Betonturmabschnitts 2 exzentrisch angeordneten Spannglieder 12 aufgebracht werden, homogen und dem Kraftfluss entsprechend über ein Mantelelement 22 des ringförmigen Stahlelements 5 in den unteren Flansch 9 des Stahlelements 5 eingeleitet. Dieses wiederum trägt die Lasten gleichmäßig und vertikal über das Betonelement 6 an den darunterliegenden Betonturmabschnitt 2 ab.

Neben den Durchgangsbohrungen für die Spannglieder 12 können weitere Bohrungen wie z. B. Sacklochbohrungen zur Befestigung von Inneneinbauten oder Bauteilen der persönlichen Absturzsicherung an der Ankerplatte 11 vorgesehen sein. Die Durchgangsbohrungen können zudem nicht nur für die Durchführung der Spannglieder 12, sondern auch zur Handhabung und zum Heben des Adapterstücks 1 genutzt werden.

Dadurch, dass der untere Flansch 9 des Stahlelements 5 auf dem Betonelement 6 aufliegt bzw. eine obere Oberfläche 10 des Betonelements 6 bedeckt, wird ein unterer Bereich des Adapterstücks 1 definiert, welcher den Stahl-Beton-Verbund beinhaltet, sowie ein oberer Bereich des Adapterstücks 1, welcher lediglich ein Stahlmaterial beinhaltet und der Verankerung der Spannglieder 12 sowie der Befestigung des Stahlturmabschnitts 3 dient. Das Betonelement 6 kann hierdurch sehr kompakt ausgeführt werden und ist im Wesentlichen auf den eigentlichen Übergang zwischen Stahl und Beton reduziert. Das Adapterstück 1 kann hierdurch sehr kostengünstig hergestellt werden, da der hohe Stahlanteil auch eine automatisierte Fertigung erlaubt. Insbesondere jedoch weist das Adapterstück 1 eine vorteilhafte, vergleichsweise geringe Masse auf und kann durch die Ausführung als Stahl-Beton-Verbundbauteil dennoch enorme Kräfte abtragen.

Um die Auflage des Adapterstücks 1 auf dem Betonturmabschnitt 2 zu verbessern, ist vorzugsweise die Anlagefläche 8 des Betonelements 6 überschliffen. Hierzu werden vorteilhaft Toleranzen von maximal 5/10 mm vorgegeben und die Adapterstücke 1 entsprechend vermessen.

Bei dem vorliegend gezeigten Adapterstück 1 ist zudem das Betonelement 6 nicht nur an seiner oberen Oberfläche 10 durch den unteren Flansch 9 des Stahlelements 5 bedeckt, sondern zugleich auch zwischen vorliegend zwei Schalungselementen 16 gefasst, welche demnach ebenfalls eine verlorene Schalung für das Betonelement 6 bilden. Abweichend von der gezeigten Darstellung ist es jedoch ebenso möglich, lediglich im Bereich der inneren Mantelfläche oder lediglich im Bereich der äußeren Mantelfläche des Stahlelements 5 ein festes Schalungselement als verlorene Schalung vorzusehen und die jeweils andere Mantelfläche herkömmlich zu schalen.

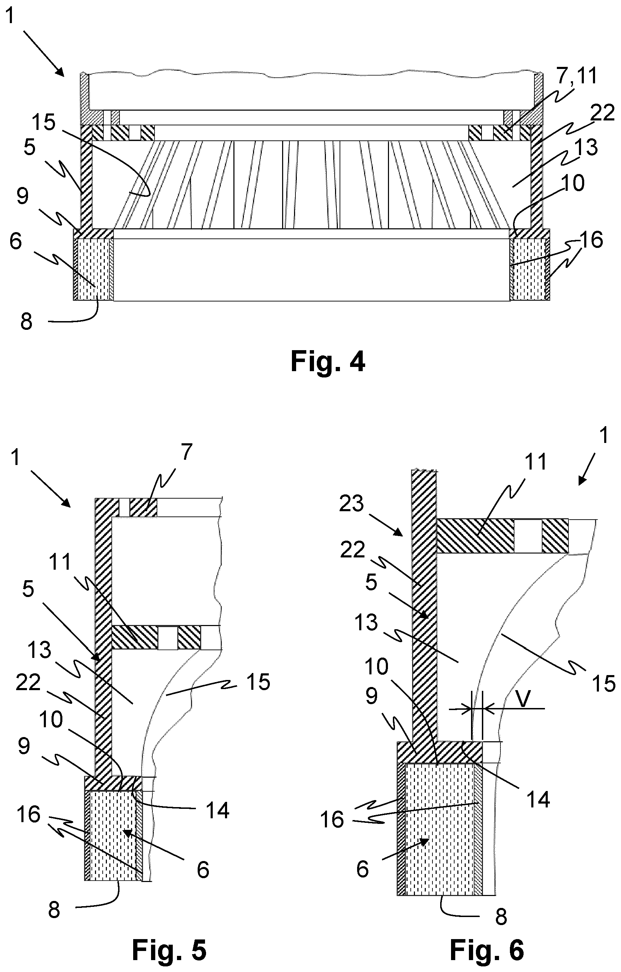

Weiterhin noch ersichtlich sind Versteifungsstreben 13, welche über den Innenumfang des Adapterstücks 1 verteilt sind und deren Funktion anhand der Figuren 5-14 erläutert wird.

Die oben ausgeführten möglichen Varianten bezüglich der Schalungselemente 16, des Befestigungsflansches 7 sowie des unteren Flansches 9 sind im Übrigen auch für die nachfolgend dargestellten Adapterstücke 1 möglich, auch wenn dies nicht gesondert bei der jeweiligen Figurenbeschreibung erwähnt wird.

Figur 3 zeigt ein Adapterstück 1 nach einer weiteren Ausführung. Bei dieser sind der L-förmige Befestigungsflansch 7, der untere T-förmige Flansch 9, das Mantelelement 22 sowie die Ankerplatte 11 jeweils als separate Bauteile dargestellt, welche beispielsweise durch Schweißen miteinander verbunden sind. Wird das Adapterstück 1 aus mehreren Teilen als Schweißkonstruktion ausgeführt, so kann dieses besonders kostengünstig und zeitsparend hergestellt werden. Die Bauteile, insbesondere der Flansch 9, der Befestigungsflansch 7, die Ankerplatte 11 sowie das Mantelelement 22 können insbesondere durch Schweißroboter miteinander verschweißt werden. Manuelle Vor- und Nacharbeiten können hierdurch reduziert werden oder sogar vollständig entfallen. Durch die Konstruktion des Adapterstücks 1, welche überwiegend als Stahlelement 5 ausgeführt ist und nur ein reduziertes Betonelement 6 beinhaltet, kann ein sehr geringes Gewicht des Adapterstücks 1 erreicht werden, das eine automatisierte Handhabung des Adapterstücks 1 im Werk ohne Kräne ermöglicht. Hierdurch ist sowohl hinsichtlich des Material- als auch des Fertigungsaufwandes eine hohe Kostenersparnis möglich.

Figur 4 zeigt eine weitere Ausführung eines Adapterstücks 1 in einer schematischen, abgebrochenen Schnittdarstellung. Im Unterschied zu den beiden vorherigen Figuren ist bei dieser Ausführung der obere Befestigungsflansch 7 zugleich als Ankerplatte 11 zur Verankerung der Spannglieder 12 (siehe Figur 2) ausgebildet. Das Adapterstück kann hierdurch noch kompakter und leichter und aufgrund der Materialersparnis auch kostengünstiger ausgeführt werden.

Wie anhand der Figuren 2-4 ersichtlich ist, ist der obere Befestigungsflansch 7 oder die Ankerplatte 11 bzw. ein diese beiden kombinierendes Bauteil durch mehrere über einen Umfang des Adapterstücks 1 verteilte Versteifungsstreben 13 versteift. In den Figuren 2 - 4 sind dabei die Versteifungsstreben 13 als Versteifungsbleche ausgebildet und haben eine trapezförmige Form. Dabei verbinden die Versteifungsstreben 13 die obere Ankerplatte 11 bzw. den Befestigungsflansch 7 mit dem Mantelelement 22 und zugleich auch mit dem unteren Flansch 9. Abweichend von der gezeigten Darstellung wäre es jedoch ebenfalls denkbar, dass die Versteifungsstreben 13 die Ankerplatte 11 bzw. den Befestigungsflansch 7 lediglich mit dem Mantelelement 22 verbinden und sich nicht bis zu dem unteren Flansch 9 erstrecken. Auch bezüglich der nachfolgenden Figuren 5, 7 - 10 und 14 wäre eine solche Ausführung möglich. Eine radial nach innen weisende Seite 15, welche in den Figuren 2 - 4 die Schrägseite des trapezförmigen Versteifungsbleches ist, weist dabei eine lineare Kontur auf bzw. verbindet sie die obere Ankerplatte 11 bzw. den Befestigungsflansch 7 in einer linearen Linie mit dem Mantelelement 22 und dem unteren Flansch 9.

Figur 5 zeigt eine schematische, geschnittene, abgebrochene Darstellung eines Adapterstücks1 mit einer Versteifungsstrebe 13. In dieser Darstellung ist lediglich eine der Versteifungsstreben 13 zu sehen. Die Versteifungsstrebe 13 weist dabei zumindest teilweise, vorliegend vollständig eine nichtlineare bzw. eine gekrümmte Kontur auf. Hierdurch kann ein verbesserter Kraftfluss erreicht werden, welcher einen größeren Anteil der abzutragenden Kräfte in das Mantelelement 22 ableitet, welches die Kräfte wiederum in den unteren Flansch 9 abträgt. Gemäß der Darstellung der Figur 5 verbinden die Versteifungsstreben 13 dabei den Innenumfang des Befestigungsflansches 7 bzw. vorliegend den Innenumfang der Ankerplatte 11 mit dem Innenumfang des unteren Flansches 9. Der Befestigungsflansch 7 bildet dabei eine untere Aufstandsfläche für die Versteifungsstreben 13, auf welcher die Versteifungsstreben 13 mit ihrer Unterseite 14 aufliegen.

Figur 6 zeigt demgegenüber ein Adapterstück 1 mit einer versetzt angeordneten Versteifungsstrebe 13 in einer schematischen, geschnittenen, abgebrochenen Darstellung. Dabei reicht die Versteifungsstrebe 13 mit ihrer radial nach innen weisenden Seite 15 nicht bis zum Innenumfang des unteren Flansches 9, sondern ist gegenüber diesem radial nach außen versetzt angeordnet. Der untere Flansch 9 überragt demnach die Unterseite 14 der Versteifungsstreben 13 radial nach innen. Das Verformungsverhalten der Versteifungsstreben 13 unter Belastung kann hierdurch verbessert werden und ein Klaffen zwischen dem unteren Flansch 9 und dem Betonelement 6 vermieden werden. Vorteilhaft überragt dabei der untere Flansch 9 die Versteifungsstreben 13 um einen Versatz V von beispielsweise bis zu 20 mm.

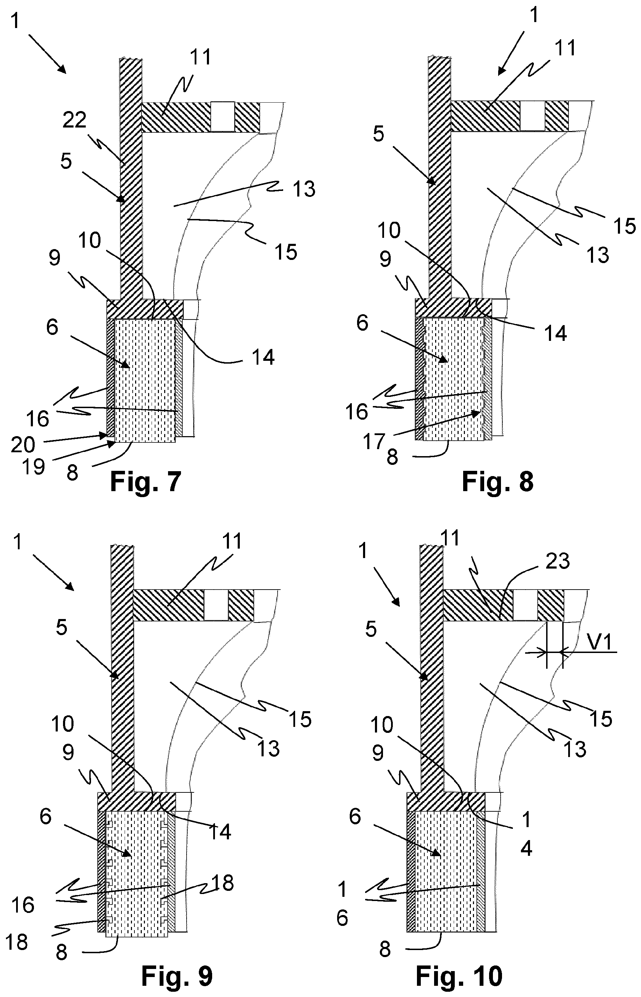

Figur 7 zeigt eine weitere Ausführung eines Adapterstücks 1. Bei dem gezeigten Adapterstück 1 überragt ein Betonende 19 des Betonelements 6 in axialer Richtung des Adapterstücks 1 ein Schalungsende 20 des wenigstens einen Schalungselements 16. Das Überschleifen des Betonelements 6 ist hierdurch erleichtert.

Figur 8 zeigt eine weitere Ausführung eines Adapterstücks 1 in einer schematischen, geschnittenen, abgebrochenen Darstellung. Im Unterschied zu den vorherigen Figuren weist das wenigstens eine Schalungselement 16, vorliegend beide Schalungselemente 16, auf seiner dem Betonelement 6 zugewandten Oberfläche bzw. seiner inneren Mantelfläche eine Profilierung 17 auf. Diese bewirkt eine mechanische Verzahnung des Betonelements 6 mit dem Schalungselement 16 und verhindert hierdurch ein Herausrutschen des Betonelements 6.

Figur 9 zeigt demgegenüber eine andere Ausführung eines Adapterstücks 1, bei welchem eine mechanische Verzahnung des Betonelements 6 mit dem Schalungselement 16 durch mehrere Ankerelemente 18 erreicht wird, welche auf der inneren Mantelfläche bzw. der dem Betonelement 6 zugewandten Oberfläche des Schalungselements 16 angeordnet sind. Auch hier sind wiederum zwei Schalungsbleche vorgesehen, welche beide mit Ankerelementen 18 versehen sind.

Ebenso kann auch die Unterseite des unteren Flansches 9 mit einer Profilierung 17, wie in Fig. 8 gezeigt, oder mit Ankerelementen 18, wie in Fig. 9 gezeigt, versehen sein, um eine gute Verzahnung des Betonelements 6 mit dem Stahlelement 5 auch im Bereich des unteren Flansches 9 zu erreichen. Es versteht sich, dass solche Profilierungen 17 oder Ankerelemente 18 auch unabhängig von der Ausführung des oder der Schalungselemente 16 vorteilhaft eingesetzt werden können.

Figur 10 zeigt eine weitere Ausführung eines Adapterstücks 1 in einer schematischen, geschnittenen, abgebrochenen Darstellung. Das Adapterstück 1 weist ebenfalls eine auf dem unteren Flansch 9 versetzt angeordnete Versteifungsstrebe 13 auf. Im Unterschied zur Ausführung der Figur 6 weist die Versteifungsstrebe 13 jedoch auch gegenüber einem Innenumfang der Ankerplatte 11 einen oberen Versatz V1 auf. Anders ausgedrückt überragt die Ankerplatte 11 eine Oberseite 23 der Versteifungsstreben 13 radial nach innen. Der Versatz V1 beträgt beispielsweise bis zu 20 mm.

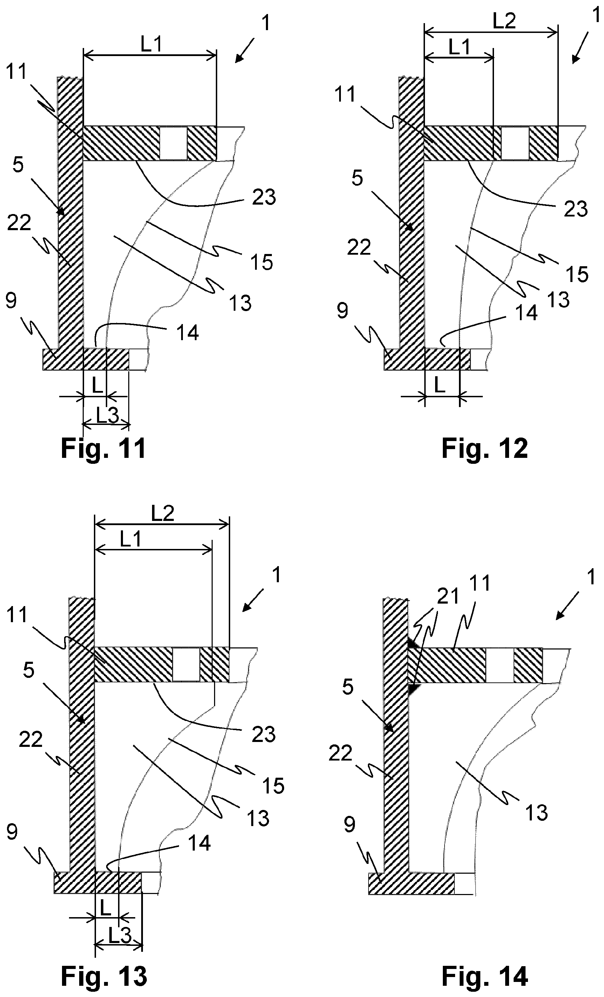

Figur 11 zeigt demgegenüber eine weitere Ausführung eines Adapterstücks 1, bei welchem die Versteifungsstreben 13 mit einem Versatz V (hier nicht bezeichnet, siehe Figur 6) gegenüber der unteren Aufstandsfläche des unteren Flansches 9 angeordnet sind. Der untere Flansch 9 überragt dabei die Unterseite 14 der Versteifungsstreben 13 um die Länge L der Unterseite 14 der Versteifungsstreben 13. Anders ausgedrückt erstreckt sich die Unterseite 14 der Versteifungsstreben 13 radial nach innen lediglich bis zur Mitte der unteren Aufstandsfläche, welche durch den radial nach innen von dem Mantelelement 22 abstehenden Bereich des unteren Flansches 9 gebildet wird. Auch mit einer solchen Ausführung kann ein besseres Verformungsverhalten des Stahlelements 5 erreicht werden und ein Klaffen auf der Außenseite zwischen dem unteren Flansch 9 und dem Betonelement 6 vermieden werden. Bevorzugt überragt dabei der untere Flansch 9 die Unterseite 14 der Versteifungsstreben 13 maximal um die Länge L der Unterseite 14 der Versteifungsstreben 13. Anders ausgedrückt ist in diesem Fall der Versatz V maximal so groß wie die Länge L der Unterseite 14 der Versteifungsstreben 13 bzw. die Länge L3 des unteren Flansches 9 maximal doppelt so lang wie die Länge L der Unterseite der Versteifungsstreben 13. Weiter ist noch die Länge L1 der Oberseite 23 der dargestellten Versteifungsstrebe 13 dargestellt.

Figur 12 zeigt eine weitere Ausführung eines Adapterstücks 1, bei welcher wie in der Figur 10 die Versteifungsstreben 13 auch in ihrem oberen Bereich gegenüber einem Innenumfang der Ankerplatte 11 radial nach außen versetzt sind. Die Oberseite 23 der gezeigten Versteifungsstrebe weist die Länge L1 auf und erstreckt sich hier in radialer Richtung bis zur Mitte der Ankerplatte 11. Die Länge L2 der Ankerplatte 11 beträgt somit das Doppelte der Länge L1 der Oberseite 23 der Versteifungsstrebe 13. Bevorzugt überragt die Ankerplatte 11 die Oberseite 23 der Versteifungsstreben 13 um höchstens die Länge L1 der Oberseite 23 der Versteifungsstreben 13. Dies trägt ebenfalls zu einer besseren Verträglichkeit der Verformung bei.

Die Figur 13 zeigt noch eine weitere Ausführung eines Adapterstücks 1, welche darstellt, dass die radial nach innen weisende Seite 15 der Versteifungsstreben 13 auch nur eine teilweise nichtlineare Kontur aufweisen kann.

Figur 14 zeigt noch eine weitere Ausführung eines Adapterstücks 1, bei welchem Schweißnähte 21 zwischen der Ankerplatte 11 und dem Mantelelement 22 dargestellt sind. Die Schweißnähte werden bevorzugt durch Hochfrequenzhämmern bearbeitet wodurch die mechanischen Eigenschaften, insbesondere die Ermüdungsfestigkeit, des Adapterstücks 1, verbessert werden. Es versteht sich, dass auch weitere, dargestellte Schweißnähte 21 durch Hochfrequenzhämmern behandelt sein können. Die Schweißnähte 21 können hierdurch reduziert werden, sodass die Erstellung des Adapterstücks 1 weiter vereinfacht ist.

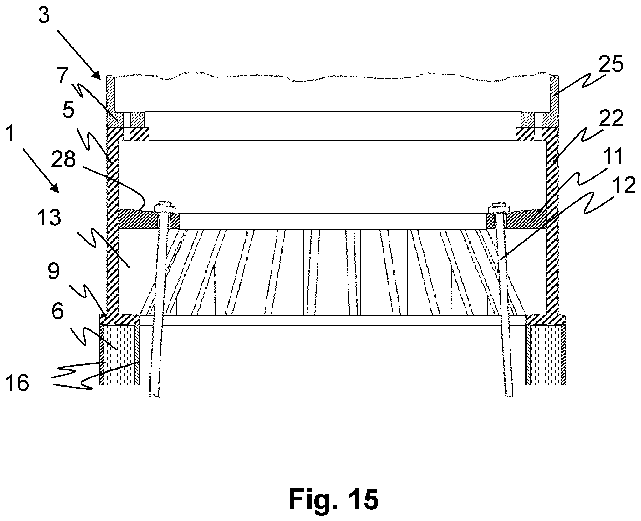

Figur 15 zeigt schließlich noch eine weitere Ausführung eines Adapterstücks 1, bei welchem eine Oberseite 28 der Ankerplatte 11 radial nach innen abfallend geneigt ist. Die Oberseite 28 der Ankerplatte 11 weist somit einen Winkel gegenüber der Horizontalen auf. Hierdurch können bei konischen Türmen die Spannglieder 12 mittels einer Stützmutter direkt auf der Oberseite 28 der Ankerplatte 11 festgelegt werden. Abgeschrägte Keilplatten, wie sie im Stand der Technik zum Einsatz kamen, sind hierdurch nicht mehr erforderlich. Vorzugsweise ist die Ankerplatte 11 um einen Winkel von bis zu 15°, vorzugsweise bis zu 5°, nach innen abfallend gegenüber der Waagrechten geneigt. Dadurch, dass das Adapterstück 1 lediglich in seinem unteren Bereich mit einem Betonelement 6 versehen ist, welches die Anlagefläche 8 beinhaltet, kann ein besonders leichtes und kompaktes Adapterstück 1 mit einer zugleich erhöhten Leistungsfähigkeit gegenüber bekannten Adapterstücken 1 bereitgestellt werden. Dies ermöglicht es auch, das Adapterstück 1 bei Türmen mit sehr großen Nabenhöhen von ca. 200 m einzusetzen. Zugleich erlaubt die überwiegende Fertigung des Adapterstücks 1 aus einem Stahlmaterial eine hochautomatisierte und kostengünstige Fertigung.

Die vorliegende Erfindung ist nicht auf die dargestellten und beschriebenen Ausführungsbeispiele beschränkt. Abwandlungen im Rahmen der Patentansprüche sind ebenso möglich.

### Bezugszeichenliste

- 1: Adapterstück
- 2: Betonturmabschnitt
- 3: Stahlturmabschnitt
- 4: Windkraftturm
- 5: Stahlelement
- 6: Betonelement
- 7: Befestigungsflansch
- 8: Anlagefläche
- 9: unterer Flansch
- 10: obere Oberfläche des Betonelements
- 11: Ankerplatte
- 12: Spannglied
- 13: Versteifungsstrebe
- 14: Unterseite der Versteifungsstrebe
- 15: radial nach innen weisende Seite
- 16: Schalungselement
- 17: Profilierung
- 18: Ankerelement
- 19: Betonende
- 20: Schalungsende
- 21: Schweißnaht
- 22: Mantelelement
- 23: Oberseite
- 24: Betonfertigteil
- 25: Stahlrohrschuss
- 26: Fundament
- 27: Oberseite der Versteifungsstrebe
- 28: Oberseite der Ankerplatte
- L: Länge der Unterseite
- L1: Länge der Oberseite
- L2: Länge der Ankerplatte
- L3: Länge des unteren Flansches
- V: Versatz
- V1: oberer Versatz

## Patentansprüche

1. Adapterstück (1) zur Verbindung eines unteren, ringförmigen Betonturmabschnitts (2) mit einem oberen, ringförmigen Stahlturmabschnitt (3), insbesondere eines Windkraftturms (4),
wobei das Adapterstück (1) als Beton-Stahl-Verbundteil mit einem ringförmigen Stahlelement (5) und einem ringförmigen Betonelement (6) ausgebildet ist,
wobei das ringförmige Stahlelement (5) einen oberen, insbesondere L-förmigen, Befestigungsflansch (7) zum Verbinden mit dem Stahlturmabschnitt (3) umfasst
und wobei das Adapterstück (1) eine Anlagefläche (8) umfasst, mit der das Adapterstück (1) auf dem Betonturmabschnitt (2) anordenbar ist, **dadurch gekennzeichnet,**
**dass** das Betonelement (6) die Anlagefläche (8) aufweist und dass das ringförmige Stahlelement (5) einen unteren, insbesondere T-förmigen, Flansch (9) aufweist, welcher eine obere Oberseite (10) des Betonelements (6) bedeckt, vorzugsweise vollständig bedeckt.

2. Adapterstück (1) nach dem vorhergehenden Anspruch, **dadurch gekennzeichnet, dass** das ringförmige Stahlelement (5) eine, insbesondere unterhalb, des oberen Befestigungsflansches (7) angeordnete, insbesondere radial nach innen weisende, ringförmige Ankerplatte (11) zur Verankerung von vorzugsweise externen Spanngliedern (12) aufweist.

3. Adapterstück (1) nach Anspruch 1, **dadurch gekennzeichnet, dass** der obere Befestigungsflansch (7) zugleich als Ankerplatte (11) zur Verankerung von vorzugsweise externen Spanngliedern (12) ausgebildet ist.

4. Adapterstück (1) nach einem der vorhergehenden Ansprüche, **dadurch gekennzeichnet, dass** der obere Befestigungsflansch (7) oder die Ankerplatte (11) durch mehrere, über einen Umfang des Adapterstücks (1) verteilte, Versteifungsstreben (13) versteift ist, wobei vorzugsweise der obere Befestigungsflansch (7) oder die Ankerplatte (11) durch die mehreren Versteifungsstreben (13) mit dem unteren Flansch (9) verbunden ist.

5. Adapterstück (1) nach einem der vorhergehenden Ansprüche, **dadurch gekennzeichnet, dass** eine radial nach innen weisende Seite (15), insbesondere eine Schrägseite, der Versteifungsstreben (13) eine zumindest teilweise nichtlineare, insbesondere zumindest teilweise ausgerundete, Kontur aufweist.

6. Adapterstück (1) nach einem der vorhergehenden Ansprüche, **dadurch gekennzeichnet, dass** der untere Flansch (9) eine untere Aufstandsfläche für die Versteifungsstreben (13) bildet.

7. Adapterstück (1) nach einem der vorhergehenden Ansprüche, **dadurch gekennzeichnet, dass** der untere Flansch (9) eine Unterseite (14) der Versteifungsstreben (13) radial nach innen überragt, wobei vorzugsweise der untere Flansch (9) die Unterseite (14) der Versteifungsstreben (13) um höchstens die Länge (L) der Unterseite (14) der Versteifungsstreben (13) überragt und wobei besonders bevorzugt der untere Flansch (9) die Unterseite (14) um höchstens 20 mm nach innen überragt.

8. Adapterstück (1) nach einem der vorhergehenden Ansprüche, **dadurch gekennzeichnet, dass** die Ankerplatte (11) oder der Befestigungsflansch (7) eine Oberseite (23) der Versteifungsstreben (13) radial nach innen überragt, wobei vorzugsweise die Ankerplatte (11) oder der Befestigungsflansch (7) die Oberseite (23) der Versteifungsstreben (13) um höchstens die Länge (L1) der Oberseite (23) der Versteifungsstreben (13) überragt und wobei besonders bevorzugt die Ankerplatte (11) oder der Befestigungsflansch (7) die Oberseite (23) der Versteifungsstreben (13) um höchstens 20 mm nach innen überragt.

9. Adapterstück (1) nach einem der vorhergehenden Ansprüche, **dadurch gekennzeichnet, dass** die Ankerplatte (11) und/oder der obere Befestigungsflansch (7) den unteren Flansch (9) radial nach innen überragt.

10. Adapterstück (1) nach einem der vorhergehenden Ansprüche, **dadurch gekennzeichnet, dass** eine Oberseite (28) der Ankerplatte (11) oder die Ankerplatte (11) radial nach innen abfallend geneigt ist, insbesondere um einen Winkel von bis zu 15°, vorzugsweise bis zu 5°, nach innen abfallend gegenüber der Waagrechten geneigt ist.

11. Adapterstück (1) nach einem der vorhergehenden Ansprüche, **dadurch gekennzeichnet, dass** die Versteifungsstreben (13) eine im Wesentlichen rechteckige oder trapezförmige Grundform, insbesondere eine rechtwinklige, trapezförmige Grundform aufweisen.

12. Adapterstück (1) nach einem der vorhergehenden Ansprüche, **dadurch gekennzeichnet, dass** an dem unteren, insbesondere T-förmigen Flansch (9) des ringförmigen Stahlelements (5) wenigstens ein ringförmiges, nach unten weisendes, Schalungselement (16), insbesondere Schalungsblech, vorzugsweise zwei radial voneinander beabstandete ringförmige, nach unten weisende Schalungselemente (16), insbesondere Schalungsbleche, angeordnet ist/sind, welche(s) das Betonelement (6) radial innen und/oder radial außen umgibt/umgeben, wobei vorzugsweise das wenigstens eine Schalungselement (16) zumindest auf seiner dem Betonelement (6) zugewandten Oberfläche eine Profilierung (17) und/oder mehrere Ankerelemente (18) aufweist.

13. Adapterstück (1) nach einem der vorhergehenden Ansprüche, **dadurch gekennzeichnet, dass** die Anlagefläche (8) überschliffen ist, wobei vorzugsweise ein Betonende (19) des Betonelements (6) in Axialrichtung des Adapterstücks (1) über ein Schalungsende (20) des zumindest einen Schalungselements (16) übersteht.

14. Adapterstück (1) nach einem der vorhergehenden Ansprüche, **dadurch gekennzeichnet, dass** Schweißnähte (21) des Stahlelements (5), insbesondere Schweißnähte (21) zwischen der Ankerplatte (11) und einem Mantelelement (22) des Stahlelements (5), durch Hochfrequenzhämmern bearbeitet sind.

15. Turm, insbesondere Windkraftturm (4), mit einem unteren, ringförmigen Betonturmabschnitt (2), mit einem oberen, ringförmigen Stahlturmabschnitt (3), und mit einem Adapterstück (1) nach einem der vorhergehenden Ansprüche.
